(19) Europäisches Patentamt
European Patent Office
Office européen des brevets

(11) EP 4 552 495 A1

(12) EUROPEAN PATENT APPLICATION

(43) Date of publication:
**14.05.2025 Bulletin 2025/20**

(21) Application number: **23208643.9**

(22) Date of filing: **08.11.2023**

(51) International Patent Classification (IPC):
***A01N 37/02*** (2006.01) ***A01N 37/06*** (2006.01)
***A01N 63/40*** (2020.01) ***A01N 65/48*** (2009.01)
***A01P 1/00*** (2006.01) ***A23K 20/105*** (2016.01)
***A23K 50/75*** (2016.01)

(52) Cooperative Patent Classification (CPC):
(C-Sets available)
**A01P 1/00; A01N 37/02; A01N 37/06; A01N 63/40; A01N 65/48; A23K 20/105; A23K 50/75** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Stiftung Tierärztliche Hochschule Hannover**
**30559 Hannover (DE)**

(72) Inventors:
- **Peh, Elisa**
  **49163 Bohmte (DE)**
- **Kittler, Sophie**
  **30974 Wennigsen (DE)**
- **Bogun, Katrin**
  **26169 Friesoythe (DE)**

(74) Representative: **Sonnenhauser, Thomas Martin**
**Wuesthoff & Wuesthoff**
**Patentanwälte und Rechtsanwalt PartG mbB**
**Schweigerstraße 2**
**81541 München (DE)**

# (54) ADDITIVE COMPOSITION FOR BACTERIAL LOAD REDUCTION

(57) The present invention refers to additive compositions that can be used for the reduction of bacterial load, such as the load of *Campylobacter,* the compositions comprising one or more of sorbic acid and salts thereof, one or more of propionic acid and salts thereof, and one or more of acetic acid and salts thereof; wherein the composition is free of benzoic acid and salts thereof, as well as the use of said compositions in a method of treating an inflammatory condition in a patient and food for a mammal comprising the additive composition.

EP 4 552 495 A1

(52) Cooperative Patent Classification (CPC): (Cont.)

C-Sets
**A01N 37/02, A01N 37/02, A01N 37/06,**
**A01N 63/40;**
**A01N 37/02, A01N 37/02, A01N 37/06,**
**A01N 63/40, A01N 65/48;**
A23V 2002/00, A23V 2250/05, A23V 2250/022,
A23V 2250/054

## Description

The present invention relates to additive compositions, such as food additive and pharmaceutical compositions, which can be used as antibacterial additives for reducing the bacterial load, particularly in a subject, in a feed, in water after application of the composition, in particular the bacterial load of *Campylobacter.*

## Technical background

In 2021, campylobacteriosis was the most commonly reported infection with 127,840 confirmed cases. *Campylobacter (C.) jejuni* and *C. coli* are the most important species. During processing of chicken carcasses at slaughter, cross-contamination may occur from intestinal content and the bird's skin. It is estimated that a 3-$log_{10}$ reduction in *Campylobacter* concentration in the ceca could reduce the risk of human campylobacteriosis arising from broiler meat consumption by 58 %.

Several mitigation measures have been investigated in the past, targeting the poultry meat production line, comprising different stages of the food chain. Applying mitigation measures during primary poultry production can have a major impact on the entry of *Campylobacter* during slaughter and processing.

Organic acids, plant extracts, and bacteriophages are mitigation measures under discussion for *Campylobacter* reduction. Organic acids are naturally derived organic compounds with acidic properties and approved for use in animal production. Previous *in vitro* studies show that a combination of different organic acids has advantages over single administration, for example, the concentrations of the individual organic acids can be reduced in some combinations synergistic activities occur. However, few investigations addressed the application of combined organic acids. In the present study, we build upon a systematically developed and tested organic acid blend.

Curcumin is a bioactive polyphenol, which is extracted from rhizomes of *Curcuma longa.* Various studies demonstrated the pharmacologic properties of curcumin, such as antioxidant, anti-inflammatory, and antimicrobial effects. However, to our knowledge, this is the first *in vivo* study investigating the antimicrobial activity of curcumin under commercial conditions.

Bacteriophages (phages) are viruses that specifically infect certain bacterial cells [27]. Application of *Campylobacter*-specific phages via drinking water showed promising reductions of more than 3.2 log units in commercial settings. The use of phages in Australian broilers has been shown to achieve reductions of up to 3 log units in one barn. Phages belonging to group II, predominantly classified as *Firehammervirus,* recognize their hosts by targeting the flagellum and are capable of infecting both *C. coli* and *C. jejuni.* Group III phages, classified as *Fletchervirus,* attach to the host's capsular polysaccharides and exclusively infect *C. jejuni.* According to previous studies, a combination of both phage groups was most effective for *Campylobacter* mitigation. Also higher *Campylobacter* reductions after applying mixtures of phages from both groups compared to application of single phages have previously been observed. However, there are few data on the application of a phage mixture under commercial conditions and effective composition - with economically and ecologically suitable components - are highly desirable.

Various studies have investigated mitigation measures at different stages along the food chain in the past but none of the measures seems suitable for effectively reducing *Campylobacter* in a single application. A promising approach is the combined application of different measures to achieve an accumulation of reducing effects in a multiple-hurdle approach. However, there is a desire for effective additive compositions which can be based on abundant and non-toxic components.

The article "Large-scale feasibility of organic acids as a permanent preharvest intervention in drinking water of broilers and their effect on foodborne Campylobacter spp. before processing" by Jansen et al. (Journal of Applied Microbiology, 116, 2014) discloses the effect of a commercially available acidifying drinking water additive in broiler flocks on *Campylobacter* spp. in field trials, wherein the commercially available additive is based on short-chain organic acids (in ascending order: formic acid, acetic acid, propionic acid and sorbic acid) and MCFA combined with ammonium formate and coconut/palm kernel fatty acid distillate, aiming at a target concentration in the drinking water of 0.075%.

The article "Prevention of intestinal Campylobacter jejuni colonization in broilers by combinations of in-feed organic acids" by Skånseng et al. (Journal of Applied Microbiology, 109, 2010) discloses the effect of various combinations of formic acid and sorbate on *Campylobacter jejuni* colonization in broiler chickens to reduce the colonization of this zoonotic pathogen in broiler chicken flocks.

The review "Management Strategies for Prevention of Campylobacter Infections Through the Poultry Food Chain: A European Perspective" by Alter et al. (published in Current Topics in Microbiology and Immunology Volume 431 by Springer) discloses a review of studies point that out that, a complete elimination of *Campylobacter* species in the poultry food chain is not feasible, thus, the current aim should be to establish control measures and intervention strategies to minimize the occurrence of *Campylobacter* spp. in livestock (esp. poultry flocks) and to reduce the quantitative *Campylobacter burden* along the food chain in animals and subsequently in foods.

The article "Antimicrobial effect of a drinking water additive comprising four organic acids on Campylobacter load

in broilers and monitoring of bacterial susceptibility" by Szott et al. (Poultry Science, 101, 2022) discloses the use of organic acids at determining the antibacterial efficiency of this combination in vivo as a drinking water additive for reducing shedding and intestinal *C. jejuni* colonization in broilers.

The article "In Vitro Investigation of the Antibacterial Activity of Nine Commercial Water Disinfectants, Acidifiers, and Glyceride Blends against the Most Important Poultry Zoonotic Bacteria" by Mantzios et al. (Pathogens, 12, 2023) discloses the antibacterial activity of nine commercial water disinfectants, acidifiers, and glyceride blends against clinical isolates or reference strains of zoonotic pathogens belonging to the genera *Escherichia* spp., *Salmonella* spp., *Campylobacter* spp., *Listeria* spp., and *Staphylococcus* spp.

WO 2019/038351 A1 discloses a diet comprising from 60 to less than 90 g of all of the amino acids aspartic acid, glutamic acid, proline, serine, and/or salts thereof, per kg dry matter of the diet, at least 5 g methionine, a methionine derivative and/or a salt thereof per kg dry matter of the diet, and from 60 g +/- 10% to 190 g +/- 10% crude protein per kg dry matter of the diet, and a diet with this composition for use in the treatment and/or prophylaxis of *Campylobacteriosis* in poultry.

WO 2013/121214 A1 discloses a method of preventing or reducing the colonization of the gastrointestinal tract of an animal with *Campylobacter.*

CN 114514963 A discloses a slow-release compound feed acidifies for pigeons and a preparation method thereof.

However, there is a desire for additive compositions having antimicrobial properties for treatment and/or improving storage stability, in particular with respect to *Campylobacter,* which are effective, non-toxic, versatile with respect to the combination with other active components, while having excellent solubility, viscosity and preparatory properties.

**Summary of the invention**

Surprisingly the present inventors found that an additive composition comprising one or more of sorbic acid and salts thereof, one or more of propionic acid and salts thereof, and one or more of acetic acid and salts thereof can surprisingly effectively reduce the bacterial load in water, feed etc. although the composition is free of benzoic acid and salts thereof. Examples 1 to 4 show the antibacterial properties of the additive composition of the present invention.

As discussed above, campylobacteriosis was the most frequently reported foodborne gastrointestinal infection in the European Union in 2020 and can pose a serious health risk to humans. While broiler meat is considered to be the most important source for human infection, other sources are similarly relevant for human and/or animal health. *Campylobacter* mitigation along the food production chain is considered effective for minimizing the public health burden of human campylobacteriosis. It was unexpectedly found that the present additive compositions, including e.g. drinking water additives and feed additives, can result in significant reductions in fecal samples and in cecal samples of poultry at slaughter. The additional application of a phage mixture/bacteriophages, comprising for example of *Fletchervirus* phage or *Firehammervirus* phage, can result in further bacterial reduction in fecal samples already one day after dosing.

Therefore, the additive compositions including the organic acids as defined in the claims have high value for the control of the bacterial load/infection in a subject (particularly in the gastrointestinal tract), as well as in feed, food or water (particularly of *Campylobacter*) as a food additive, a pharmaceutical composition, as feed additive, and as water additive without being limited to these applications.

The present invention is therefore directed to an composition, preferably an additive composition, comprising

a. one or more of sorbic acid and salts thereof,
b. one or more of propionic acid and salts thereof, and
c. one or more of acetic acid and salts thereof; wherein

the composition is free of benzoic acid and salts thereof.

The present invention is further directed to the use of an additive composition as defined in the claims for antimicrobial stabilization of an animal feed or water.

The present invention is further directed to a pharmaceutical composition as defined in the claims, for use in a method of reducing the bacterial load in an animal or human being, preferably the bacterial load of *Campylobacter* in an animal, wherein the method comprises administering the pharmaceutical composition to an animal or human being.

The present invention is further directed to food for a mammal comprising the food/feed additive composition as defined in the claims.

**Brief description of the drawings**

Figure 1 shows the amount of colony forming units (CFU) by'days post hatch' (dph) of colonies treated with compositions during and after multiple-hurdle application according the present invention.

Figure 2 shows the amount of colony forming units (CFU) by'days post hatch' (dph) of colonies treated with compositions according the present invention.

Figure 3 shows the amount of colony forming units (CFU) by'days post hatch' (dph) of colonies treated with curcumin compositions.

Figure 4 shows results of multilocus sequence typing analysis.

**Detailed description of the invention**

The present invention relates to an additive composition comprising: one or more of sorbic acid and salts thereof, one or more of propionic acid and salts thereof, and one or more of acetic acid and salts thereof; wherein the composition is free of benzoic acid and salts thereof.

In the context of the present invention, all "embodiments", "examples" and aspects described herein can be combined with each other.

The expression "free of" a substance such as "free of benzoic acid" defines the absence of any additional amounts of said substance. Minor amounts (0.5 wt% or less) of benzoic acid can, for example, be present in food and/or feed based on vegetable components. Preferably, "free of" defines the absence of any detectable amounts of said substance, e.g. benzoic acid. For example, benzoic acid can have a limit of detection of about 0.5 $\mu$g/mL by chromatography or spectroscopy.

As used herein, the term "additive composition" refers to a material that can be in solid form, in fluid (in particular liquid) form, or can be prepared as ready to use composition or prepared shortly for feeding/administering to a subject or the additive is continuously added to the feed during the feeding process. Preferably, the additive composition is provided in liquid form, further preferred as an aqueous solution comprising the acids as defined in the claims. The additive composition can comprise further components as described in the following.

The additive composition can be added to another composition, wherein the other composition can be in solid, liquid, fluid form etc.

The additive composition comprises one or more of sorbic acid and salts thereof as defined in the claims. The term "sorbic acid" as used herein refers to the chemical compound represented by Formula I below. Sorbic acid, or 2,4-hexadienoic acid, is a natural organic compound that can be used as a food preservative. It has the chemical formula $CH_3(CH)_4CO_2H$ and the structure $H_3C\text{-}CH{=}CH\text{-}CH{=}CH\text{-}C({=}O)OH$. Sorbic acid can be a colorless solid that is soluble in water. The additive composition can comprise sorbic acid or salts thereof (sorbates).

Due to the solubility of sorbic acid (and of the salts thereof) in water or aqueous media, the (additive) composition can thus comprise sorbic acid (in protonated, or deprotonated, i.e. as anion, form and mixtures of protonated and deprotonated sorbic acid) as well as salts thereof (in salt form or dissolved, as anion). Salts of sorbic acid according to the present disclosure include, but are not limited to, alkali salts of sorbic acid, metal alkali salts of sorbic acid, ammonium or substituted ammonium salts of sorbic acid. In preferred embodiments, the sorbic acid or salts thereof comprise potassium sorbate, preferably consist of potassium sorbate.

It is emphasized that the sorbic acid can deprotonate and the salts thereof can dissolve in aqueous media. The sorbic acid or salts thereof according to the present disclosure thus encompass any deprotonated, and/or dissociated form of sorbic acid and salts thereof, as well as associated (recombined) salts thereof by other combining the anion of sorbic acid with one or more further cation(s) present in the additive composition or present in a composition comprising the additive composition. Sorbic acid:

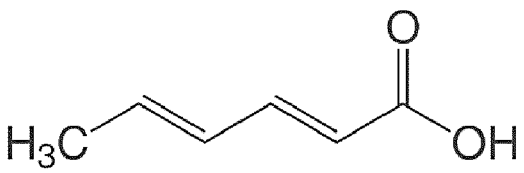 (I)

The additive composition further comprises one or more of propionic acid and salts thereof as defined in the claims. The term "propionic acid" as used herein refers to the chemical compound represented by Formula II below. Propionic acid, also known as propanoic acid, is a naturally occurring carboxylic acid with chemical formula $CH_3CH_2CO_2H$. It can be a liquid with a pungent and unpleasant smell somewhat resembling body odor. The anion

$CH_3CH_2CO_2$- as well as the salts and esters of propionic acid are known as propionates or propanoates. Propionic acid can be a colorless solid and is soluble in water. The additive composition can comprise propionic acid or salts thereof (propionates).

Due to the solubility of good propionic acid (and of the salts thereof) in water or aqueous media, the composition can comprise propionic acid (in protonated, deprotonated, i.e. as anion, form and mixtures of protonated and deprotonated propionic acid) as well as salts thereof (in salt form or dissolved, as anion). Salts of propionic acid according to the present disclosure thus include, but are not limited to, alkali salts of propionic acid, metal alkali salts of propionic acid, ammonium or substituted ammonium salts of propionic acid. In preferred embodiments, the propionic acid or salts thereof comprise sodium propionate, preferably consist of sodium propionate.

It is emphasized that the propionic acid can deprotonate and the salts thereof can dissolve in aqueous media. The propionate acid or salts thereof according to the present disclosure thus encompass any deprotonated, and/or dissociated form of propionate acid and salts thereof, as well as associated (recombined) salts thereof by combining the anion of propionate acid with one or more further cation(s) present in the additive composition or present in a composition comprising the additive composition. Propionic acid:

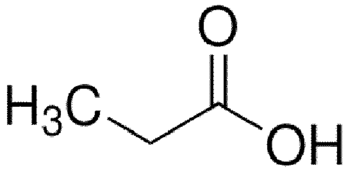
(II)

The additive composition comprises one or more of acetic acid and salts thereof as defined in the claims. The term "acetic acid" as used herein refers to the chemical compound represented by Formula III below. Acetic acid is an acidic, colorless liquid and organic compound with the chemical formula $CH_3COOH$ (also written as $CH_3CO_2H$, $C_2H_4O_2$, or $HC_2H_3O_2$). The additive composition comprises acetic acid or salts thereof (acetates).

Due to the good solubility of acetic acid (and of the salts thereof) in water or aqueous media, the composition can comprise acetic acid (in protonated, deprotonated, i.e. as anion, form and mixtures of protonated and deprotonated acetic acid) as well as salts thereof (in salt form or dissolved, as anion). Salts of acetic acid according to the present disclosure thus include, but are not limited to, alkali salts of acetic acid, metal alkali salts of acetic acid, ammonium or substituted ammonium salts of acetic acid. In preferred embodiments, the acetic acid or salts thereof comprise sodium acetate, preferably consist of sodium diacetate.

It is emphasized that the acetic acid can deprotonate and the salts thereof can dissolve in aqueous media. The acetic acid or salts thereof according to the present disclosure thus encompass any deprotonated, and/or dissociated form of acetic acid and salts thereof, as well as associated (recombined) salts thereof by combining the anion of acetic acid with one or more further cation(s) present in the additive composition or present in a composition comprising the additive composition. Acetic acid:

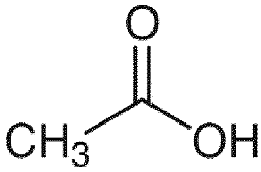
(III)

In a further embodiment, the composition is a human food additive composition, an animal feed additive composition, or a human or veterinary pharmaceutical composition.

The term "additive composition" as used herein refers to any composition which can be added to a product comprising also e.g. vitamins, nutrients, or other performance-enhancing components, wherein the final product is intended as food for animals and/or humans. Non-limiting examples of additive compositions are supplements, concentrates, premixes, cores, among others. Additive compositions are compositions that are suitable to be used without necessarily requiring a specific dosage regimen, dosage interval etc.

As used herein, the term "human food additive (composition)" refers to substances within the scope of the claims that can be added to food to maintain or improve its safety, freshness, taste, texture, appearance, including to maintain or improve its microbial properties, i.e. its bacterial load. Accordingly, the dose is not a treatment dose for humans or animals, but a dose which improves the storage stability of the food composition itself. The term "human food additive (composition)" thus refers to products used in human nutrition for the purpose of improving the quality of the food. The additives may be in solid form, or in fluid (liquid) form. The additives may thus be provided as solution or as a mixture of solid components

(e.g. solid carrier(s)) and the acids. Further active or supplementary components may be included in the food composition as part of an additive composition or as isolated components. When included in the food composition as part of an additive composition, it may be a concentrated composition mainly comprising an additive component or it may be a supplementary component.

As used herein, the term "feed additive (composition)" refers to a material within the scope of the claims that can be added to a feed composition, and may correspond to a supplementary feed according to the *Control of Livestock and Fish Feed Act.* The feed additive may be used to improve productivity of animals or livestock. The feed additive may also be used in method of improving health and welfare of animals or livestock.

Food and feed additive composition according to the present invention can further comprise one or more of proteins, (dietary) fiber, vitamins, minerals (e.g., calcium, iron, potassium), sugars (simple carbohydrates), antioxidants, amino acids, enzymes, lipids (including triglycerides, phospholipids, and sterols), essential fatty acids (e.g., omega-3 and omega-6 fatty acids) starch, phytochemicals (e.g., flavonoids, polyphenols), preservatives, food additives (e.g., food colorings, flavor enhancers), food emulsifiers, anti-nutrients (e.g., oxalates, phytates).

As used herein, the term "pharmaceutical composition" (such as pharmaceutical compositions suitable for humans and/animals (i.e. veterinary pharmaceutical composition) as used herein refers to compositions that can be used in therapy of mammals, e.g. humans or animals. Specifically, suitable compositions thus include, but are not limited to, compositions having a concentration of actives that is effective to improve the health of the subject after administering said composition in a single or multi-application regimen. Pharmaceutical compositions within the present disclosure are in particular suitable or provided for oral consumption, but not limited thereto. Pharmaceutical compositions within the present disclosure may be formulated to provide a controlled release, such as a delayed, sustained/slow release, of the actives comprised in the composition. Pharmaceuticals compositions according to the present invention can be sterile and/or comprise a carrier as discussed in the following.

Pharmaceutical composition according to the present invention can comprise excipients, such as one or more of binders (e.g., lactose, starch, cellulose derivatives), fillers or diluents (e.g., microcrystalline cellulose, calcium phosphate), disintegrants (e.g. croscarmellose sodium, crospovidone), colorants, flavors and sweeteners (e.g. artificial flavors, aspartame), preservatives (e.g., benzalkonium chloride, parabens), antioxidants (e.g., vitamin E, butylated hydroxyanisole (BHA)), co-solvents (e.g., propylene glycol, polyethylene glycol (PEG)), buffering agents (e.g. sodium phosphate).

Pharmaceutical compositions according to the present invention can also comprise antibacterial agents, such as one or more of tetracyclines (e.g., oxytetracycline), penicillins (e.g., amoxicillin), sulfonamides (e.g., sulfamethazine), macrolides (e.g., tylosin), quinolones (e.g., enrofloxacin), aminoglycosides (e.g., neomycin), lincomycin, virginiamycin, bacitracin, polymyxins (e.g., colistin), cephalosporins (e.g., cefalexin), florfenicol, avilamycin, carbadox, tiamulin, neocarzinostatin, spectinomycin, streptomycin, novobiocin, chlortetracycline.

The term "controlled release" as used herein can thus refer to a slow release of the active ingredient wherein substantially all of the active ingredients in the composition are released in up to 6 hours or more than 6 hours. It is not intended to be restricted to any particular kinetic pattern of release. In alternative embodiments, the active ingredient in the composition is released in 0.5 hours or less, optionally 0.2 hours or less, optionally 5 minutes or less, further optionally 1 minute or less. In further embodiments, in particular when the composition is provided in liquid form, the actives are essentially present in the liquid in released form. It is not intended to be restricted to any particular kinetic pattern of release.

In a further embodiment, the composition is a food or feed additive composition wherein the food or feed additive composition comprises one or more of sorbic acid and salts thereof, one or more of propionic acid and salts thereof and one or more of acetic acid and salts thereof in an amount of from 3.0 to 99.0 %, preferably 4.0 to 95.0 %, further preferred 5.0 to 90.0 % by weight of the composition. The composition can thus comprise one or more of sorbic acid and salts thereof, one or more of propionic acid and salts thereof and one or more of acetic acid and salts thereof in an amount of from 3.0 to 20.0 %, 4.0 to 15 %, 5.0 to 12.5 %, 7.5 to 10 %. Alternatively, the composition can thus comprise one or more of sorbic acid and salts thereof, one or more of propionic acid and salts thereof and one or more of acetic acid and salts thereof in an amount of from 40.0 to 99.0, 50.0 to 95.0 %, 60.0 to 90 %, 65.0 to 80.0 %, 70.0 to 75.0 %.

The food or feed additive composition comprises the active components as defined in the claims in amounts suitable to be added to food or feed. Suitable concentrations can vary within the claimed ranges defined above, depending on the particular use. The additive compositions can be added in a single addition, a multi addition to a feed or continuously. The food or feed additive can be in the form of a liquid, a solid, a gel etc., depending on the further components of the composition such as carriers.

The additive composition typically contains a solid or liquid carrier. Liquid carriers for providing the food additive or pharmaceutical composition include but are not limited to water.

The composition can also be in the form of a pharmaceutical composition and wherein the pharmaceutical composition comprises one or more of sorbic acid and salts thereof, one or more of propionic acid and salts thereof and one or more of acetic acid and salts thereof in an amount of from 0.05 to 20.0 %, preferably 0.5 to 15.0 %, further preferred 5.0 to 12.0 % by weight of the composition.

The pharmaceutical composition comprises the active components as defined in the claims in amounts suitable

to be provided to a mammal as a pharmaceutical. Suitable concentrations can vary within the claimed ranges defined above, depending on the particular use, i.e. depending on the patient group (sex, age, weight) and medical condition. The pharmaceutical composition can be administered in a single dose, a multi dose (twice or more daily) to a mammal (human or animal) or long-term treatment. The pharmaceutical composition can be in the form of a liquid, a solid, a gel etc., depending on the further components of the composition. The pharmaceutical composition can thus be in the form of an orally acceptable tablet, an orally acceptable gel, an orally acceptable liquid, an orally acceptable pellet, an orally acceptably syrup, an orally acceptable tablet etc. It is to be noted that "additive compositions" and "pharmaceutical compositions" generally have a higher concentration of the acids according to the invention as compared with food/feed compositions which contain said additive compositions as ingredient.

The pharmaceutical composition can be ready for use, i.e. ready for administration to a subject/patient. An additive composition is intended to be combined with further components, for example diluted with aqueous solutions or food compositions.

In a further embodiment, the pharmaceutical composition which is ready to use comprises

a. sorbic acid or a salt thereof in an amount of from 0.5 to 20.0 % by weight of the composition, preferably from 5.0 to 18.0 % by weight of the composition, further preferred from 10.0 to 5.0 % by weight of the composition, further preferred about 12.0% potassium sorbate by weight of the composition;

b. propionic acid or a salt thereof in an amount of from 0.1 to 15.0 % by weight of the composition, preferably from 1.0 to 10.0 % by weight of the composition, further preferred from 4.0 to 6.0 % by weight of the composition, further preferred about 5.1% sodium propionate by weight of the composition, or

c. acetic acid or a salt thereof in an amount of from 0.05 to 5.0 % by weight of the composition, preferably from 1.0 to 2.5 % by weight of the composition, further preferred from 1.5 to 2.2 % by weight of the composition, further preferred about 1.9 % by weight sodium diacetate of the composition.

In a further embodiment, said one or more of sorbic acid and salts thereof comprise an alkali metal salt of sorbate, preferably potassium sorbate, said one or more of propionic acid and salts thereof comprise an alkali metal salt of propionate, preferably sodium propionate, and/or said one or more of acetic acid and salts thereof comprise an alkali metal salt of acetate, preferably sodium diacetate.

The compositions of the present disclosure can comprise corresponding salts of the acids as defined in the claims. Preferred salts include, but are not limited to, alkali and earth alkali salts. Such salts provide further improved solubility in aqueous compositions. Preferred metals of the salts thus include lithium, sodium, potassium rubidium, etc. Preferably sodium and/or potassium.

That is, also mixtures of salts can be used according to the present disclosure. For example, sorbic acid can be provided in the form of sorbic acid, as well as sodium sorbate and potassium sorbate. Similarly, propionic acid can be provided in the form of propionic acid, as well as sodium propionate and potassium propionate. Similarly, acetic acid can be provided in the form of acetic acid, as well as sodium diacetate and potassium acetate.

In preferred embodiments, more than 25 %, more than 40 %, more than 50 %, more than 60 %, more than 70 %, more than 75 %, more than 80 %, more than 85 %, more than 90 %, or more than 95 % of the acids and salts thereof are provided in the form of salts thereof. In alternative preferred embodiments, more than 25 %, more than 40 %, more than 50 %, more than 60 %, more than 70 %, more than 75 %, more than 80 %, more than 85 %, more than 90 %, or more than 95 % of the acids and salts thereof are provided in the form of acids.

The components of the composition can be provided in acid form, as salts thereof and also as corresponding anions thereof. That is, upon addition, and depending on the environment of the composition (including pH), of the acids to an aqueous medium or upon dilution of the acids with an aqueous medium, the acids or salts thereof can dissociate partially or fully to the corresponding ions. That is, the sorbic acid or salt thereof can be present partially or fully as sorbic acid anion (i.e. sorbate). Similarly, the propionic acid can be present partially or fully as propionate. Similarly, the acetic acid can be present partially or fully as acetate. The state of the acids and/or salts thereof is also dependent on the counter ions (cations) present in the composition. That is, in the presence of particular metal and/or organic cations, insoluble salts can form. The term "insoluble" as used herein refers to compounds having a very low solubility product in aqueous solutions having a pH of from 1 to 13 (for example below 0.1 g/L, preferably below 0.01 g/L, further preferred below 0.001 g/L).

In a further embodiment, the composition is further comprising a substituted or unsubstituted diarylalkyl compound, preferably a substituted or unsubstituted diarylheptanoid, further preferred curcumin.

Dialkylaryl compounds and mixtures of such compounds can be present in the composition in amounts of from 0.01 weight% to 10.0 weight%, preferably 0.05 weight% to 5.0 weight%, further preferred 0.1 weight% to 2.0 weight%, further preferred 0.5 weight% to 1.0 weight%. Preferred concentrations of the dialkyaryl compounds thus range from 10 mg/kg (of ready for use compositions) to 5000 mg/kg (of ready for use composition), preferably of from 25 mg/kg to 1000 mg/kg, further preferred from 50 mg/kg to 500 mg/kg, further preferred from 100 to 250 mg/kg, further preferred from 125 mg/kg to 200 mg/kg, further preferred from 150 mg/kg to 175 mg/kg, further preferred about 160 mg/kg added to a feed.

Other dialkylaryl compounds include 4-Acyl-5-pyrazolones, such as 4-benzoyl-3-methyl-1-phenyl-pyrazol-5-one.

Curcumin, is a bioactive polyphenol, which can be extracted from rhizomes of *Curcuma longa.* Various studies demonstrated the pharmacologic properties of curcumin, such as antioxidant, anti-inflammatory, and antimicrobial effects. Curcumin can play an important role in food preservation as a natural food preservative with efficient broad-spectrum antimicrobial properties and antioxidant properties. However, due to its phenolic character (resulting in hydrophobic properties), it has not been applied in (aqueous) acids compositions.

In a further embodiment, the composition is further comprising one or more types of bacteriophages, preferably comprising *Fletchervirus* phage and/or *Firehammervirus* phage.

Bacteriophages (phages) are viruses that specifically infect certain bacterial cells. Application of *Campylobacter*-specific phages via drinking water can show reductions of more than 3.2 log units in commercial settings. Phages belonging to group II, predominantly classified as *Firehammervirus,* can recognize their hosts by targeting the flagellum and are capable of infecting both *C. coli* and *C. jejuni.* Group III phages, classified as *Fletchervirus,* can attach to the host's capsular polysaccharides and exclusively infect *C. jejuni.* A combination of both phage groups can be most effective for *Campylobacter* mitigation. A higher *Campylobacter* reduction can be observed after applying mixtures of phages from both groups compared to application of single phages. In preferred embodiments, the phages or a mixture of phages is provided in concentration of from $1.0\times10^5$ PFU/(animal/human/bird/bird) to $1.0\times10^9$ PFU/(animal/human/bird/bird), preferably from $1.0\times10^6$ PFU/(animal/human/bird/bird) to $1.0\times10^8$ PFU/(animal/human/bird/bird), further preferred about $1.0\times10^7$ PFU/(animal/human/bird/bird).

In a further embodiment, the composition further comprises one or more C3-C24 substituted or unsubstituted organic acids, optionally citric acid, formic acid, trifluoracetic acid, trichloracetic acid, tartaric acid, lactic acid, oxalic acid, succinic acid, salicylic acid, gallic acid, p-toluene sulfonic acid, malic acid, mandelic acid, picric acid, glycolic acid, maleic acid, adipic acid, butyric acid, barbituric acid, decanoic acid, azelaic acid, camphoric acid, cyanuric acid, gluconic acid, thiosalicylic acid, valeric acid, cacodylic acid, phthalic acid, thiodiglycolic acid, abietic acid, diglycolic acid, isobutyric acid, cinnamic acid, humic acid or anhydrides thereof.

Other organic and inorganic components (including acids and salts thereof) can be present in the composition. In preferred embodiments, one or more further organic acids can be present in the composition in amounts of from 0.01 to 10.0 weight%, or from 0.05 to 5.0 weight%, or from 1.0 to 2.5 weight%.

In a further embodiment, the composition comprises less than 50 %, less than 25 %, or less than 10 % by weight of further organic acids, relative to the one or more of sorbic acid and salts thereof one or more of propionic acid and salts thereof, and one or more of acetic acid and salts thereof, further preferred wherein the composition is substantially free of further organic acids. That is, in preferred embodiments, sorbic acid or salts thereof, propionic acids or salts thereof and acetic acids or salts thereof are the only organic acids, preferably the one acids present in the additive composition.

In alternative embodiments, the composition can comprise essentially the acids as defined in the claims and only low amounts of further organic acids without reducing the antibacterial properties of the composition thereby. In preferred embodiments, the composition is essentially free of further organic acids.

In a further embodiment, the composition comprises organic acids or salts thereof consisting essentially of potassium sorbate, sodium propionate sodium diacetate.

In preferred embodiments, potassium sorbate, sodium propionate sodium diacetate have shown the best antimicrobial properties stemming from the higher solubility and antibacterial properties of these components, while being non-toxic for an animal and/or human provided with a feed, food or pharmaceutic composition to which the additive composition had been added. That is, due to the solubility of these components, relatively low amounts of the actives can be used in the additive composition while achieving high antibacterial properties.

In a further embodiment, the additive composition can comprise minerals, vitamins (e.g. vitamin A, $D_3$, E) and other supplementary components. The additive composition can also be applied in addition to an antibiotic therapy, including treatment with lincomycin, spectinomycin, and/or other actives.

In a further embodiment, the composition is liquid, preferably the pH of the composition is from pH = 3 to pH = 10, preferably from pH = 4 to pH = 8, further preferred from pH = 5 to pH = 7.

In a further embodiment, the composition does not comprise a further antibacterial agent selected from the group consisting of aminoglycosides, fluoroquinolones and quinolones, ketolides, lincomycins, macrolides, phenicols, tetracyclines, preferably wherein the composition does not comprise any further antibacterial agent.

The antibacterial properties provided by the acids and salts thereof as defined in the claims can be sufficient to provide the desired effect without having to rely on additional antibacterial and/or antimicrobial agents. The present compositions can thus provide good antibacterial properties (in particular vs. *Campylobacter*) without the necessity of potentially toxic or otherwise harmful actives. In preferred embodiments, the amount of additional antibacterial agents as defined above added to the composition is below 1.0 weight%, preferably below 0.5 weigh%, further preferred below 0.1 weight% further preferred below 0.05 weight%, further preferred essentially free of such agents (below 0.001 weight%). However, it is emphasized that such components (such as aminoglycoside) can be naturally present in the feed or food to which a composition according to the present invention, which are not considered as actives added to the composition.

The present invention further refers to the use of an additive composition as defined in the claims for microbial stabilization of an animal feed or water, such as drinking water.

The term "stabilizing" as used herein refers to the microbial stability, i.e. keeping the level of microbes sufficiently low during storage of a composition, a feed, an aqueous solution, such as water comprising the composition according to the present disclosure and further components. "Stabilizing" as used herein thus defines that the bacterial load, such as the total bacterial load or the bacterial load of a particular bacteria (e.g. *Campylobacter*), is at least maintained at a specific level or reduced to a level below the initial level (i.e. before addition of the additive composition according to the present disclosure).

The expression "use of the additive composition" as used herein refers to the application of the additive composition to the animal feed or water in bulk and/or continuously. That is, the composition can be added to a specific volume of feed or water in bulk in a single application, a multiple application and/or in continuous application by dosing the additive composition continuously to the feed or water. For example, the additive composition can be added in three-hour periods for each application. Furthermore, the additive compositions can be preconditioned before being used in the animal feed or water. That is, the composition can be solubilized and or wettened (if present as a solid) or can be diluted and further concentrated (if present as a liquid).

In a further embodiment, with the use of the additive the bacterial load of *Campylobacter* in the feed, preferably the total bacterial load in the feed, is reduced by a log 2 reduction, preferably by a log 3 reduction, further preferred by a log 4 reduction, further preferred a log 5 reduction, after adding said food additive composition to the animal feed, or wherein the bacterial load of *Campylobacter* in the water, preferably the total bacterial load in the water, is reduced by a log 2 reduction, preferably by a log 3 reduction, further preferred by a log 4 reduction, further preferred by a log 5 reduction, after adding said food additive composition to the water.

As discussed above, the addition of the additive composition can be performed by a single addition, a multiple addition or continuous addition. Therefore, the above log reductions can be achieved after single application, after multiple application or by continuous application. In particular, wherein a flowing feed or water is treated with the additive composition, continuous application can be beneficial in order to maintain a continuous reduction of the bacterial (e.g. *Campylobacter*), load.

The present invention further refers to a pharmaceutical composition as defined in the claims, for use in a method of treating an inflammatory condition in a patient, wherein the method comprises administering the pharmaceutical composition to an animal or human being. The administered composition can reduce the bacterial load in the patient (animal or human being), preferably the bacterial load of *Campylobacter* in the patient), wherein the method comprises administering the pharmaceutical composition to an animal or human being.

The pharmaceutical composition can be in solid, liquid, gel form etc. That is, the pharmaceutical composition can be in the form of a solution, a gel, a pellet, a tablet, a lozenge, a powder etc. The pharmaceutical composition can be used in a method of treatment of the human or animal body. Specifically, the pharmaceutical composition can be for use in a method of treating the bacterial load (e.g. *Campylobacter*) in a human or animal, or in a method of treating disease associated with the bacterial load in a human or animal, such as *Campylobacter* infection *(Campylobacteriosis).*

The methods can comprise administering the pharmaceutical composition as a single dose, or as a multiple dose. The pharmaceutical composition can be added for example, once daily, one each six hours, once each three hours etc. depending on the severity of the disease/bacterial load. In preferred embodiments, the dose is administered regularly over a period of two days or more, three days or more, four days or more etc. The pharmaceutical composition can also be administered continuously, e.g. in a prophylactic manners and amounts.

The present invention further refers to food or feed for a mammal comprising the food/feed additive composition as defined in any the claims. The food or feed can comprise the additive composition in amounts of from 0.01 wt% to 10.0 wt% when consumed by the mammal. Preferably, the amount of the additive composition is from 0.1 wt% to 5.0 wt.%. The food or feed can be in solid form or in liquid form. The food or feed can further comprise nutrients, hydrocarbons, fiber (e.g. dietary fiber), other active or supplement components, flavorants, etc.

**Figure description**

Figure 1 is a comparison of *Campylobacter counts* of a control group ('x') and experimental PAC group (comprising phages, organic acids (sorbic, propionic, acetic as defined in the claims), and curcumin 'y' in Example 1. Addition of phages (P) is indicated by the letter 'P'. Addition of acids according to the present invention (sorbic, propionic, acetic) (A) is indicated by the letter 'A'. Addition of curcumin (C) is indicated by the letter 'C'. The x-axis shows the dph = days post hatch shown (e.g. 31, 33, 34). The y-axis shows the $\log_{10}$ of colony forming units per mL ([CFU/mL]).

Birds in the experimental PAC group received a phage mixture ($1.0 \times 10^7$ PFU/bird), an organic acid blend via drinking water and curcumin (160 mg/kg) via feed. Treatment of experimental PAC group: top arrow = organic acid blend, middle arrow = phage mixture, bottom arrow = curcumin. Figure 1a *Campylobacter counts* in fecal and cecal samples until thinning. At day 31, samples were taken first and afterwards dosing was started. Figure 2b *Campylobacter* counts of fecal

(left) and cecal (right) samples after thinning until slaughter (n = 19). Boxplots indicate minimum, maximum, upper and lower quartile and median values (n=19). Significance levels (P values) determined by Mann-Whitney U test are indicated with * (P < 0.05).

Figure 2 is a comparison of *Campylobacter* counts of a control group (x) and A group (z), receiving organic acids via drinking water and P group (y), receiving a phage mixture ($8.94 \times 10^6$ PFU/bird) via drinking water. Treatment of experimental groups: top arrow = organic acid blend in A group, bottom arrow = phage mixture in P group. Figure 2a *Campylobacter counts* in fecal (left) and cecal (right) samples until thinning. At day 31, samples were taken first and afterwards dosing was started. Figure 2b *Campylobacter counts* of fecal and cecal samples after thinning until slaughter (n = 19). Boxplots indicate minimum, maximum, upper and lower quartile and median values (n=19). Significance levels (P values) determined by Kruskal-Wallis test are indicated with * (P < 0.05). dph = days post hatch. The x-axis shows the dph = days post hatch shown (e.g. 31, 33, 34). The y-axis shows the $\log_{10}$ of colony forming units per mL ([CFU/mL]).

Figure 3 is a comparison of *Campylobacter counts* of a control group (x) and C group (y) receiving curcumin (160 mg/kg) via feed. Treatment of experimental group: arrow = curcumin (C). Figure 3a *Campylobacter counts* in fecal and cecal samples until thinning. Figure 3b *Campylobacter counts* of fecal (left) and cecal (right) samples after thinning until slaughter (n = 19). Boxplots indicate minimum, maximum, upper and lower quartile and median values (n=19). Significance levels (P values) determined by Mann-Whitney U test are indicated with * (P < 0.05). dph = days post hatch. The x-axis shows the dph = days post hatch shown (e.g. 26, 29). The y-axis shows the $\log_{10}$ of colony forming units per mL ([CFU/mL]).

Figure 4a are results of multilocus sequence typing analysis (MLST) of representative isolates of Example 1 in naturally colonized broiler flocks. Different sequence types (ST) are indicated. The arrows represent the examinations at the beginning and at the end of the field trials (examples). Experimental PAC group, receiving a phage mixture and an organic acid blend via drinking water and curcumin via feed as indicated. Experimental A group receiving an organic acid blend as indicated. Experimental P group receiving a phage mixture as indicated.

Figure 4b are results of multilocus sequence typing analysis (MLST) of representative isolates of Example 2 in naturally colonized broiler flocks. Sequence types (ST) are color-coded. The arrows represent the examinations at the beginning and at the end of the examples. Experimental C group receiving curcumin via feed as indicated.

## Examples

Overall, two examples (field trials) were conducted at a commercial broiler fattening plant. Both examples were carried out on the same farm, but in different barns. Information on flock size, breed, vaccination, and biosecurity measures are summarized in Supplementary Tables 1 and 2 shown below. In both examples, identical conditions existed between control and experimental groups in terms of vaccinations, breed, and barn staff. Application of antibiotics differed between the groups (see Supplementary Tables 1 and 2), but none of the preparations used were agents that would affect *Campylobacter* colonization.

Table 1

| **Field trial design 1** | | | | | |
|---|---|---|---|---|---|
| | **Control group PAC** | **Experimental group (PAC)[a]** | **Control group A/P** | **Experimental group (P)[b]** | **Experimental group (A)[c]** |
| Flock size<br>before thinning<br>before final slaughter | <br>26,000<br>19,646 | <br>27,000<br>16,200 | <br>30,500<br>18,792 | <br>34,300<br>20,200 | <br>30,800<br>23,807 |
| Fattening period (days) | 42 | 42 | 42 | 42 | 42 |
| Breed | Ross 308 | | | | |
| Positive PCR result for *Campylobacter* spp.[d] | 26 dph | 26 dph | 30 dph | 30 dph | 30 dph |
| Biosecurity<br>Building<br>Change of boots<br>Change of clothes | <br>separate<br>yes<br>no | <br>separate<br>yes<br>yes | <br>separate<br>yes<br>no | <br>separate<br>yes<br>yes | <br>separate<br>yes<br>no |
| Vaccination[e] | IBDV, NDV, IBV | | | | |
| Feed additives | Minerals, Vit. A, $D_3$, E | | | | |

(continued)

| Field trial design 1 | | | | | |
|---|---|---|---|---|---|
| | **Control group PAC** | **Experimental group (PAC)[a]** | **Control group A/P** | **Experimental group (P)[b]** | **Experimental group (A)[c]** |
| Early antibiotic therapy | Lincomycin, Spectinomycin 1 dph - 3 dph | | | | |
| Antibiotic therapy (additional) | Colistin sulfate<br>35 dph - 37 dph | | Penicillin<br>30 dph - 32 dph | Penicillin<br>27 dph - 29 dph | |

Table 2

| Field trial design 2 | | |
|---|---|---|
| | **Control group** | **Experimental group (C)[a]** |
| Farm | 1 | 1 |
| Flock size (before thinning) | 27,000 | 30,000 |
| Fattening period (days) | 41 | 41 |
| Breed | Ross 308 | |
| Positive PCR result for *Campylobacter* spp.[b] | 25 dph | 25 dph |
| Biosecurity<br>Buildings of stables<br>Change of rubber boots<br>Change of clothes | <br>different<br>yes<br>no | <br>different<br>yes<br>no |
| Vaccination[c] | IBDV, NDV, IBV | |
| Feed additives | Minerals, Vit. A, $D_3$, E | |
| Early antibiotic therapy | Lincomycin, Spectinomycin 1 dph - 3 dph | |

The first example included a total of five groups, including two control groups and three experimental groups. The animals in all groups were housed on the same day and were the same age. To ensure a natural colonization process of *Campylobacter,* only stables that were naturally colonized were selected. Since in the first example, two stables tested positive for *Campylobacter* at day 26 post hatch and three other stables tested positive at day 30 post hatch, two control groups were established for better comparison of the colonization progress. Control group PAC tested positive for *Campylobacter* at day 26 post hatch was assigned to the experimental group that received a combination treatment of phages, organic acids, and curcumin (experimental group "PAC"). The three groups that tested positive at day 30 post hatch were divided into control group A/P and the two experimental groups receiving phages ("P") and organic acids ("A").

The second example included a control group and an experimental group receiving curcumin via feed (experimental group "C"). Both groups were located in two different buildings in order to provide separate feed and water supplies for both groups of animals. The animals in both groups were housed on the same day and were the same age. At day 25 post hatch, both groups were tested positive for *Campylobacter* by real-time PCR (Kylt, AniCon Labor GmbH, Höltinghausen, Germany) from fecal samples.

**Example 1: experimental group organic acids (A)**

In the first example, the application of an organic acid blend via drinking water and possible effects on *Campylobacter* colonization were investigated. A mixture of sorbic acid, benzoic acid, propionic acid, and acetic acid was selected. The organic acid blend was adapted because of the poor solubility particularly of benzoic acid and to some extend also sorbic acid. After excluding benzoic acid and using the respective salts of the three remaining acids (i.e. sorbate, propionate, acetate), a mixture of sodium propionate, potassium sorbate, and sodium diacetate was prepared. The organic acid blend was dosed at 5 L per 1000 L of drinking water. The dosing was carried out daily from positive *Campylobacter* sampling (Table 3 shown below) and was paused for one day during application of phages.

Table 3

| Field trial design 1 | | | | | | | | |
|---|---|---|---|---|---|---|---|---|
| Days post hatch | Control group PAC | Experimental group (PAC)[a] | | | Control group A/P | Experimental group (P)[b] | Experimental group (A)[c] | Sample collection[d] |
| 25 | | | | | | | | |
| 26 | | | | | | | | |
| 27 | | | | | | | | |
| 28 | | | | | | | | |
| 29 | | | | | | | | |
| 30 | | | | | | | | |
| 31 | | | | A | | | A | FS |
| 32 | | | | A | | | A | |
| 33 | | P | C | | | P | | FS, WS |
| 34 | | | C | A | | | A | FS. WS |
| 35 | | | C | A | | | A | cs |
| 36 | | | C | A | | | A | |
| 37 | | | C | A | | | A | |
| 38 | | | C | A | | | A | FS |
| 39 | | | C | A | | | A | |
| 40 | | P | C | | | P | | FS, WS |
| 41 | | | C | | | | | FS, WS |
| 42 | | | | | | | | cs |

**Example 2: experimental group phages (P)**

The phage mixture consisted of a well-characterized *Fletchervirus* phage NCTC 12673 of the British phage typing scheme and a *Firehammervirus* phage LmqsCPL1/1 that had been newly isolated.

For propagation of phage strains, *Campylobacter* was grown on sheep blood agar (Oxoid Deutschland GmbH, Wesel, Germany) and incubated at 41.5 $\pm$1 °C for 18 hours under microaerobic conditions (5 % $O_2$, 10 % $CO_2$, and 85 % $N_2$). Subsequently, grown colonies were suspended in 10 mmol $MgSO_4$. Density was adjusted to McFarland standard 3 (Densimat; bioMérieux). Phage NCTC 12673 was propagated on *C. jejuni* host strain NCTC 12661 and phage LmqsCPL1/1 was propagated on C. *coli* host strain Cc084610.

For propagation of phages, several flasks were each filled with 300 mL brain heart infusion broth (BHI), 18 mL inoculum (McFarland standard 3), and 6 mL of the respective phage suspension (log10 7.5 PFU/mL). Afterwards, flasks were swayed on an orbital shaker at 130 rpm under microaerobic conditions. After incubation, the contents of the flasks were centrifuged at 13,000 x g for 10 minutes at 4 °C and filtered with VacuCap filtration devices (0.8/0.2 $\mu$m) (Pall Corporation, Port Washington, NY, USA) using a vacuum pump. Phage suspension was stored at 4 °C. Propagation of the two phages was performed separately and calculated volumes of both phages were mixed on the day of application.

The phage mixture was applied in experimental group P and PAC two days before thinning (33 days post hatch (dph)) and two days before slaughter (40 dph) (Table 4 shown below). The drinking water supply was stopped two hours before phage dosing to make the animals thirsty and increase phage uptake. Dosing of phages into the drinking lines was carried out over a three-hour period for each application.

Table 4

| Field trial design 2 | | | |
|---|---|---|---|
| Days post hatch | Control group | Experimental group (C)[a] | Sample collection[b] |
| 25 | | | |

(continued)

| Field trial design 2 | | | |
|---|---|---|---|
| Days post hatch | Control group | Experimental group (C)[a] | Sample collection[b] |
| 26 | | | FS |
| 27 | | | |
| 28 | | | |
| 29 | | C | FS |
| 30 | | C | CS |
| 31 | | C | |
| 32 | | C | |
| 33 | | C | FS |
| 34 | | C | |
| 35 | | C | |
| 36 | | C | |
| 37 | | C | FS |
| 38 | | C | |
| 39 | | C | |
| 40 | | C | FS |
| 41 | | | CS |

**Example 3: experimental group combination of phages, organic acids, and curcumin (PAC)**

After positive sampling for *Campylobacter,* animals in the experimental group PAC received curcumin via feed and organic acids and phages via drinking water (Table 3). The acid application was paused on the two days of phage application (33 dph and 40 dph).

**Example 4: experimental group curcumin (C)**

In both example, the feed additive curcumin was applied as an extract (Turmeric Extract ME, Delacon Biotechnik GmbH, Engerwitzdorf, Austria) containing 20-30 % cur-cuminoids. When determining the concentration to be used, the legal framework and prior art has to be considered with the goal of reducing *Campylobacter colonization* in the intestinal tract of broilers while reducing the required resources and optimizing the reduction of the bacterial load. Subsequently, the respective concentration of curcumin has to be considered in the context of the following aspects: (i) possible bacterial reductions, (ii) sensory examinations of poultry meat after feeding curcumin, (iii) effects on growth performance.

A concentration of 160 mg/kg feed was thus targeted. For this purpose, 800 mg/kg of the above-mentioned turmeric extract, which contained approximately 20 % cur-cuminoids, was dosed. In the second example, the reduction potential against *Campylobacter* was investigated when curcumin was administered alone (Table 4). In the first example, curcumin was applied as a feed additive in combination with a phage mixture and an inventive organic acid blend administered via drinking water.

**Sample collection**

An overview of sample collection is shown in Table 3 (example 1) and Table 4 (example 2). A total of 19 fresh fecal samples per group were collected with sterile gloves from different locations in the stable and transported in sterile plastic bags. In addition, 19 ceca per group were collected from the slaughter chain from commercial poultry slaughterhouses after evisceration. Moreover, water samples were collected from the beginning, middle, and end of the drinking lines. All samples were transported under chilled conditions at approximately 4 ± 2 °C and analyzed in the laboratory within a maximum of 24 hours.

**Microbial analysis**

Quantitative analysis of *Campylobacter* was performed in accordance with DIN EN ISO 10272-2:2017. For examination of fecal samples, 1 g of each sample was added to 9 mL of sodium chloride peptone buffer (NaCl, 8.5 g/liter; peptone, 1 g/liter). From this, $log_{10}$ serial dilutions up to $10^{-8}$ were prepared in sodium chloride peptone buffer. Subsequently, 0.1 mL of each dilution was plated on CCDA plates (Oxoid Deutschland GmbH) in duplicate and incubated at 41.5 $\pm$1 °C for 48 hours under microaerobic conditions (5 % $O_2$, 10 % $CO_2$, and 85 % $N_2$). Confirmation of presumed colonies was done by means of positive oxidase and catalase testing and evaluation of cell morphology and motility via microscopy. Of each positive sample, two isolates were collected and frozen in cryotubes (cryobank vials; skimmed milk) for subsequent examinations.

Cecal samples were collected by aseptically opening intestines from the slaughterhouse and weighing 1 g of cecal content per sample into 9 mL of sodium chloride peptone buffer. Analysis and confirmation were performed as described above.

**Further examination of representative isolates**

For species identification, representative isolates from both examples were analyzed by matrix-assisted laser desorption ionization-time of flight mass spectrometry (MALDI-TOF MS) (Microflex LT / SH MALDI-TOF, Bruker, Bremen, Germany). Furthermore, two representative isolates from each group (one isolate at the beginning of the example and one isolate directly before slaughter) were characterized with multilocus sequence type (MLST) analysis. MLST was performed as described in the prior art. Amplification was performed for all seven loci: aspA (aspartase), glnA (glutamine synthetase), gltA (citrate synthase), glyA (serine hydroxyl methyltrans-ferase), pgm (phosphor glucomutase), tkt (transketolase), and uncA (ATP synthase alpha subunit), followed by purification (QIAquick PCR & Gel Cleanup Kit, Qiagen, Hilden, Germany). Sequencing reactions were carried out by Eurofins MWG Operon (Ebersberg, Germany). The Pub MLST database was used for analysis after sequences had been aligned with Clustal Omega.

To determine susceptibility properties of isolates from the experiment, representative isolates from fecal and cecal samples were obtained on different sampling days. For this purpose, isolates from fecal and cecal samples of different time points were plated on sheep blood agar and analyzed by means of Direct Spot Test combined with a phage dilution series. Susceptibility to phages was determined individually for phage NCTC 12673 and LmqsCPL1/1 and expressed as a percentage with absolute numbers in brackets.

**Enumeration and characterization of phages**

For enumeration of phages, *C. jejuni* strain NCTC 12662 (for phage NCTC 12673) and *C. coli* strain NCTC 12667 (for phage LmqsCPL1/1) were used. One gram of cecal content or feces was added to 9 mL of SM buffer (5.8 g NaCl, 2.0 g $MgSO_4 \times 7H_2O$, 50 mL 1 M Tris, adjusted to pH 7.5, filled up with distilled water to 1000 mL) and shaken overnight at 4 °C. Subsequently, centrifugation (13,000 x g for 10 min at 4 °C) and filtration with 0.2 $\mu$m filters (Sarstedt AG & Co. KG, Nümbrecht, Germany) were performed. Drinking water samples were filtered only. After preparing a tenfold dilution series in SM buffer, phage enumeration was conducted using the double agar overlay method described in the literature.

For calculating the number of phages applied per animal, the measured concentration in the drinking water and the volume of phage-dosed drinking water were used:

$$\text{PFU/bird} = \frac{\text{phage concentration in drinking water}\left[\frac{\text{PFU}}{\text{ml}}\right] * \text{volume of phage - dosed drinking water [mL]}}{\text{number of birds per flock}}$$

Phages were investigated by restriction endonuclease analysis (REA) using HhaI and SwaI and pulsed-field gel electrophoresis (PFGE) as described in the prior art. However, for implementation of PFGE, GelRed (Biotium, Inc., Fremont, CA, USA) was used instead of ethidium bromide (EtBr).

**Statistical analysis**

The required sample size was calculated using R software version 4.0.2 (R Core Team, 2020). Based on previous example, a standard deviation of 1, delta = 1, $\alpha$ = 0.05, and $\beta$ = 0.20 was assumed. To obtain homogeneity of variance, bacterial counts were transformed into $log_{10}$ CFU/mL for microbial analysis. The data of fecal and cecal samples were analyzed using the Mann-Whitney U test (example 2) and Kruskal-Wallis test (example 1) with GraphPad Prism 9.2.0 (GraphPad Software, San Diego, CA, USA). Pairwise comparisons were performed using Dunn's multiple comparison

test. Furthermore, two-factor analysis of variance was performed with the main effects group and sampling day, and their interaction, using Tukey-Kramer adjustment as post hoc test with SAS Enterprise guide 7.1. (SAS Institute Inc., NC, USA). For all tests, p-values below 0.05 were considered statistically significant.

## Claims

**1.** Additive composition comprising

a. one or more of sorbic acid and salts thereof,
b. one or more of propionic acid and salts thereof, and
c. one or more of acetic acid and salts thereof; wherein
the composition is free of benzoic acid and salts thereof.

**2.** The composition according to claim 1, wherein the composition is a human food additive composition, an animal feed additive composition, or a human or veterinary pharmaceutical composition.

**3.** The composition according to claim 2, wherein

a. the composition is a food or feed additive composition and wherein the food or feed additive composition comprises one or more of sorbic acid and salts thereof, one or more of propionic acid and salts thereof and one or more of acetic acid and salts thereof in an amount of from 3.0 to 99.0 %, preferably 4.0 to 95.0 %, further preferred 5.0 to 90.0 % by weight of the composition, or
b. the composition is a pharmaceutical composition and wherein the pharmaceutical composition comprises one or more of sorbic acid and salts thereof, one or more of propionic acid and salts thereof and one or more of acetic acid and salts thereof in an amount of from 0.05 to 20.0 %, preferably 0.5 to 15.0 %, further preferred 5.0 to 12.0 % by weight of the composition.

**4.** The composition according to any one of claims 1 to 3, wherein the composition is a pharmaceutical composition which is ready for use and comprises

a. sorbic acid or a salt thereof in an amount of from 0.5 to 20.0 % by weight of the composition, preferably from 5.0 to 18.0 % by weight of the composition, further preferred from 10.0 to 5.0 % by weight of the composition, further preferred about 12.0% potassium sorbate by weight of the composition;
b. propionic acid or a salt thereof in an amount of from 0.1 to 15.0 % by weight of the composition, preferably from 1.0 to 10.0 % by weight of the composition, further preferred from 4.0 to 6.0 % by weight of the composition, further preferred about 5.1% sodium propionate by weight of the composition, or
c. acetic acid or a salt thereof in an amount of from 0.05 to 5.0 % by weight of the composition, preferably from 1.0 to 2.5 % by weight of the composition, further preferred from 1.5 to 2.2 % by weight of the composition, further preferred about 1.9 % by weight sodium diacetate of the composition.

**5.** The composition according to any one of claim 1 to 4, wherein

a. said one or more of sorbic acid and salts thereof comprise an alkali metal salt of sorbate, preferably potassium sorbate,
b. said one or more of propionic acid and salts thereof comprise an alkali metal salt of propionate, preferably sodium propionate, and/or
c. said one or more of acetic acid and salts thereof comprise an alkali metal salt of acetate, preferably sodium diacetate.

**6.** The composition according to any one of claims 1 to 5, further comprising a substituted or unsubstituted diarylalkyl compound, preferably a substituted or unsubstituted diarylheptanoid, further preferred curcumin.

**7.** The composition according to any one of claims 1 to 6, further comprising one or more types of bacteriophages, preferably comprising *Fletchervirus* phage and/or *Firehammervirus* phage.

**8.** The composition according to any one of claims 1 to 7, wherein the composition further comprises one or more C3-C24 substituted or unsubstituted organic acids, optionally citric acid, formic acid, trifluoracetic acid, trichloracetic acid,

tartaric acid, lactic acid, oxalic acid, succinic acid, salicylic acid, gallic acid, p-toluene sulfonic acid, malic acid, mandelic acid, picric acid, glycolic acid, maleic acid, adipic acid, butyric acid, barbituric acid, decanoic acid, azelaic acid, camphoric acid, cyanuric acid, gluconic acid, thiosalicylic acid, valeric acid, cacodylic acid, phthalic acid, thiodiglycolic acid, abietic acid, diglycolic acid, isobutyric acid, cinnamic acid, humic acid or anhydrides thereof.

**9.** The composition according to any one of claims 1 to 8, wherein the composition comprises less than 50 %, less than 25 %, or less than 10 % by weight of further organic acids, relative to the one or more of sorbic acid and salts thereof one or more of propionic acid and salts thereof, and one or more of acetic acid and salts thereof, further preferred wherein the composition is substantially free of further organic acids.

**10.** The composition according to any one of claims 1 to 9, wherein the composition comprises organic acids or salts thereof consisting essentially of potassium sorbate, sodium propionate sodium diacetate.

**11.** The composition according to any one of claims 1 to 10, wherein the composition is liquid, preferably the pH of the composition is from pH = 3 to pH = 10, preferably from pH = 4 to pH = 8, further preferred from pH = 5 to pH = 7, and/or wherein the composition does not comprise a further antibacterial agent selected from the group consisting of aminoglycosides, fluoroquinolones and quinolones, ketolides, lincomycins, macrolides, phenicols, tetracyclines, preferably wherein the composition does not comprise any further antibacterial agent.

**12.** Use of an additive composition according to any one of claims 1 to 11 for antimicrobial stabilization of animal feed or water, preferably the animal feed is stable for at least 3 months.

**13.** The use according to claim 12, wherein the bacterial load of *Campylobacterin* the feed, preferably the total bacterial load in the feed, is reduced by a log 2 reduction, preferably by a log 3 reduction, further preferred by a log 4 reduction, , further preferred by a log 5 reduction, after adding said food additive composition to the animal feed, or wherein the bacterial load of *Campylobacter* in the water, preferably the total bacterial load in the water, is reduced by a log 2 reduction, preferably by a log 3 reduction, further preferred by a log 4 reduction, , further preferred by a log 5 reduction, after adding said food additive composition to the water.

**14.** A pharmaceutical composition according to any one of claims 1 to 11, for use in a method of treating an inflammatory condition in a patient, wherein the method comprises administering the pharmaceutical composition to an animal or human being.

**15.** Food for a mammal comprising the food/feed additive composition as defined in any one of claims 1 to 11.

Figure 1

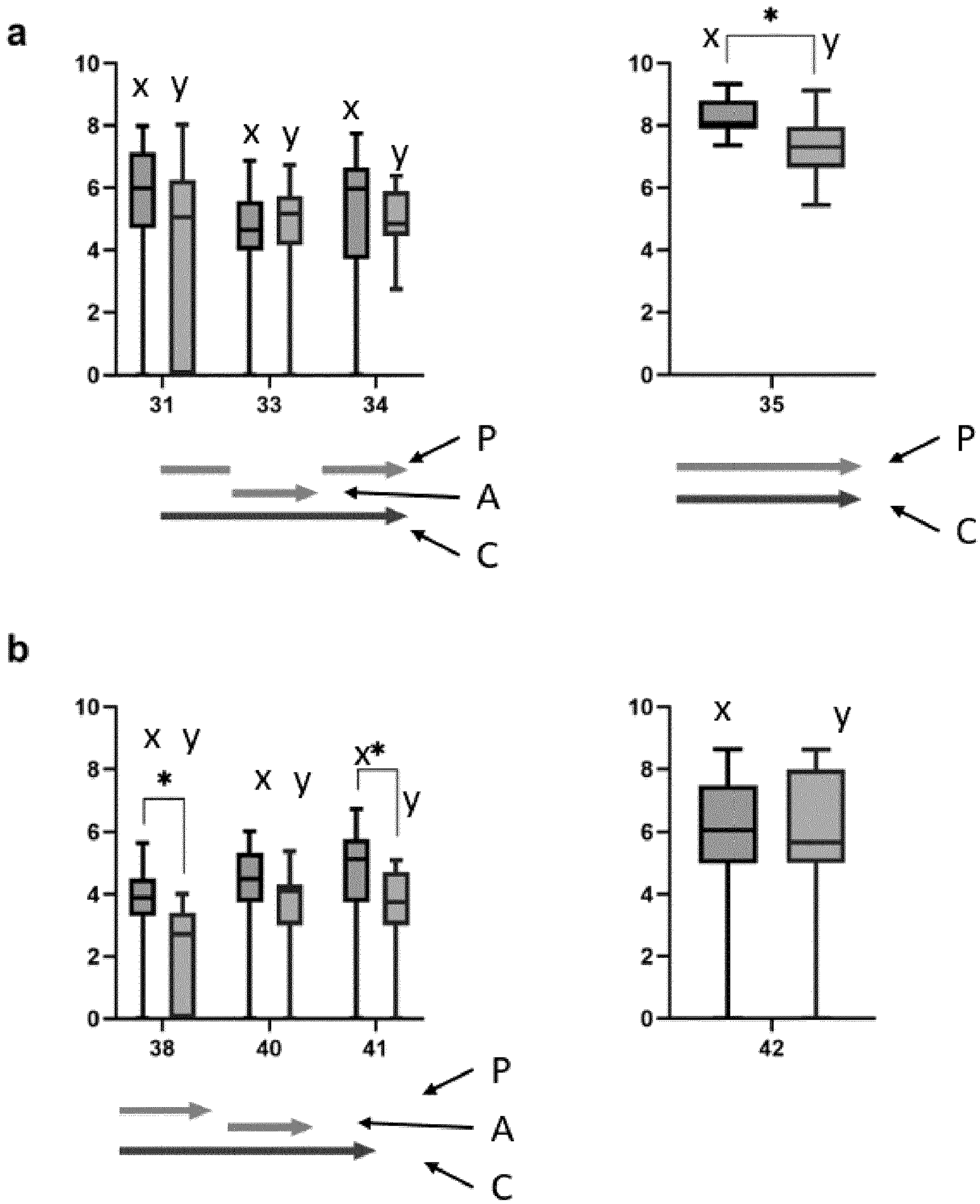

Figure 2

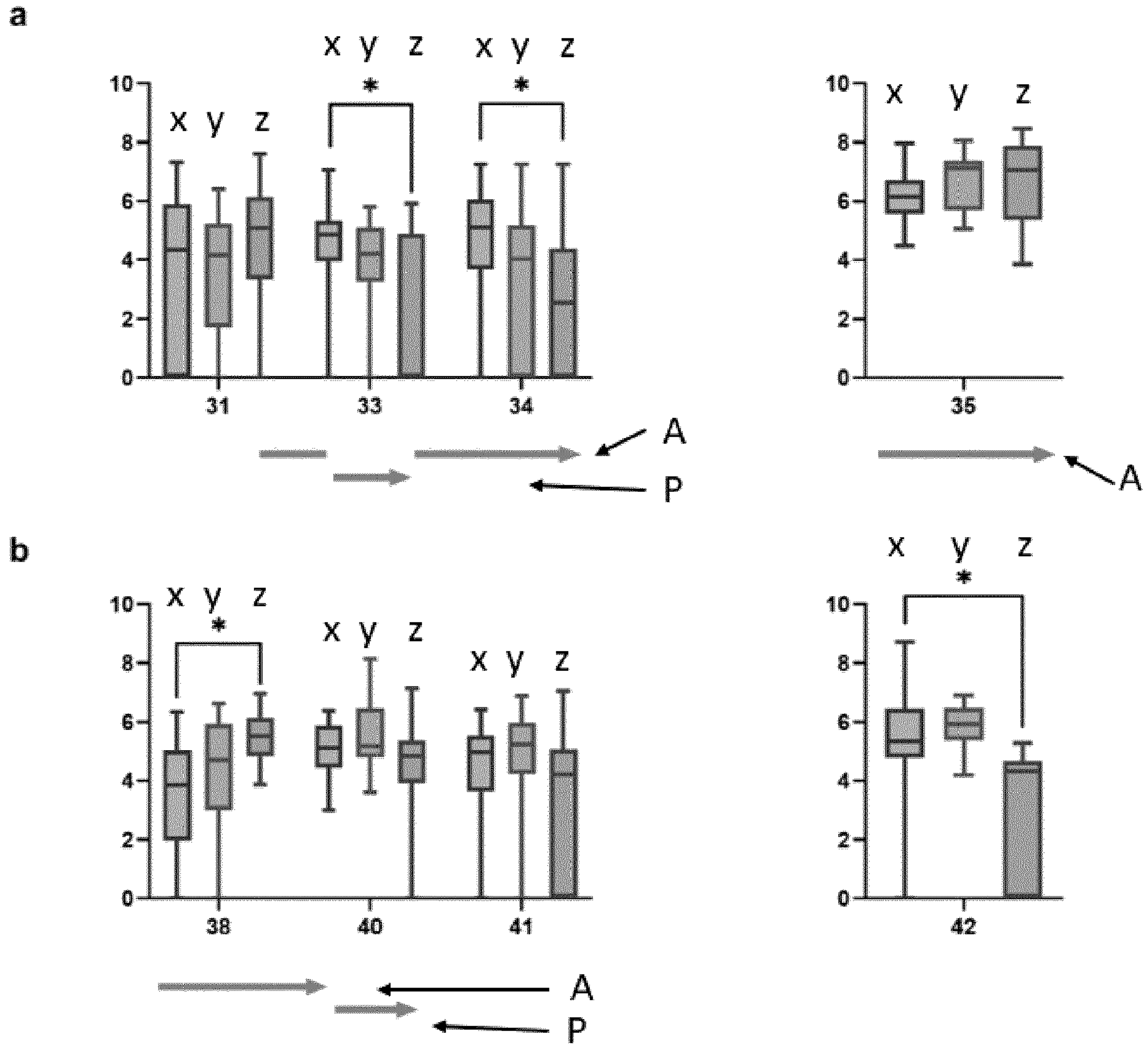
a
x y z
x y z
x y z
x y z
10
8
6
4
2
0
31
33
34
35
A
P
A
b
x y z
x y z
x y z
x y z
10
8
6
4
2
0
38
40
41
42
A
P

Figure 3

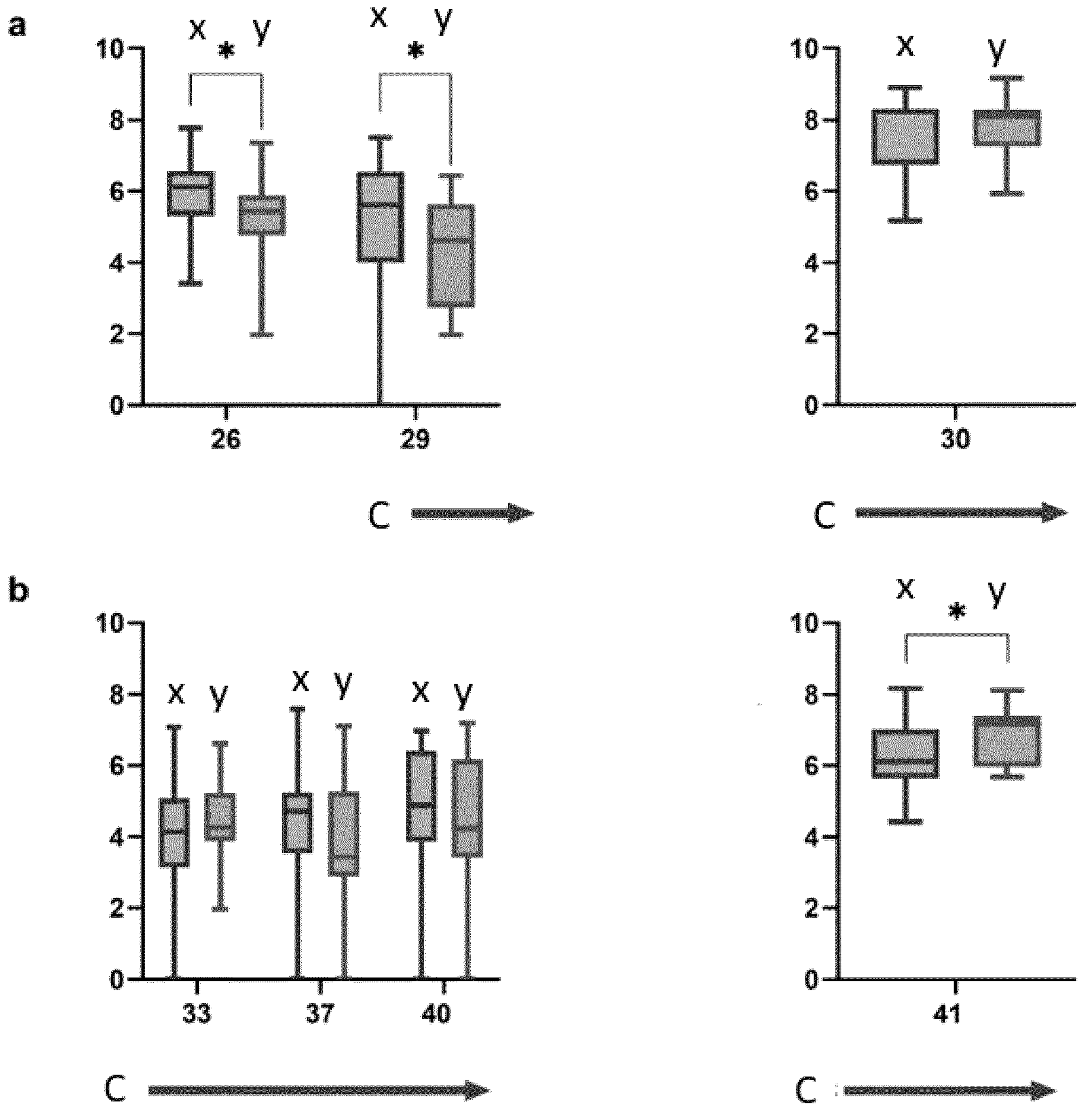
a
x
y
*
x
y
*
10
8
6
4
2
0
26
29
C
x
y
10
8
6
4
2
0
30
C
b
10
8
6
4
2
0
x
y
x
y
x
y
33
37
40
C
x
y
*
10
8
6
4
2
0
41
C

Figure 4

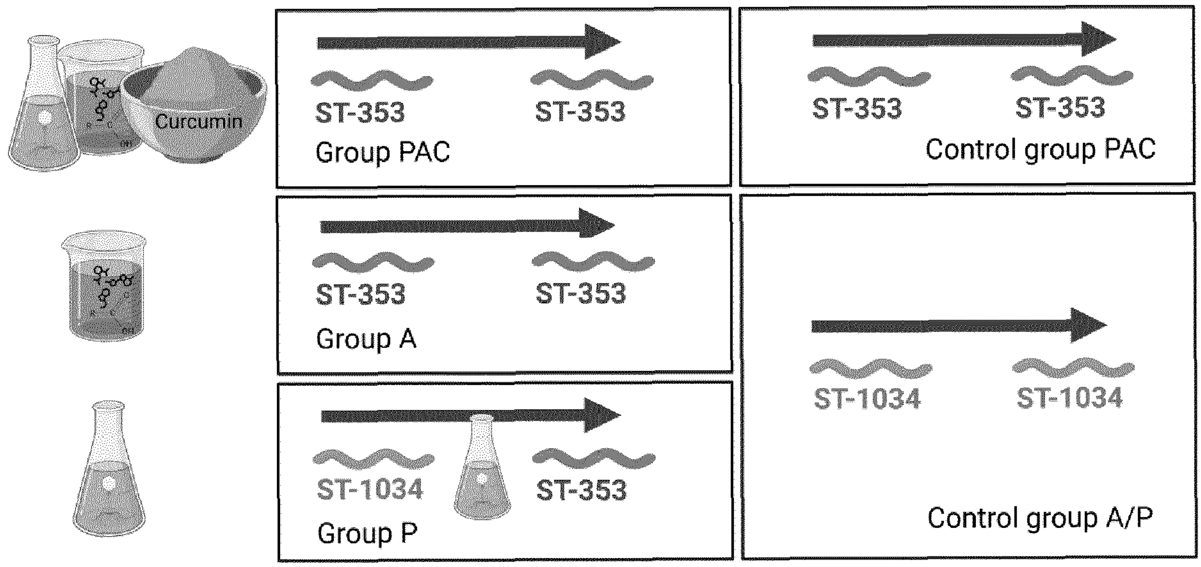
Curcumin
ST-353
ST-353
Group PAC
ST-353
ST-353
Control group PAC
ST-353
ST-353
Group A
ST-1034
ST-353
Group P
ST-1034
ST-1034
Control group A/P

European Patent Office / Europäisches Patentamt / Office européen des brevets

# EUROPEAN SEARCH REPORT

Application Number
EP 23 20 8643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | CN 114 514 963 A (GUANGDONG NEW PILOT ECOLOGICAL AGRICULTURE DEVELOPMENT LTD COMPANY ET) 20 May 2022 (2022-05-20)<br>* pages 4-5, paragraph 25 *<br>----- | 1-15 | INV.<br>A01N37/02<br>A01N37/06<br>A01N63/40<br>A01N65/48<br>A01P1/00<br>A23K20/105<br>A23K50/75 |
| X<br><br><br><br><br><br><br><br><br><br><br><br>Y | PEH ELISA ET AL: "Antimicrobial activity of organic acids against Campylobacter spp. and development of combinations-A synergistic effect?",<br>PLOS ONE, [Online]<br>vol. 15, no. 9,<br>17 September 2020 (2020-09-17), page e0239312, XP055915925,<br>DOI: 10.1371/journal.pone.0239312<br>Retrieved from the Internet:<br>URL:https://www.ncbi.nlm.nih.gov/pmc/articles/PMC7497993/pdf/pone.0239312.pdf><br>title;<br>* abstract *<br>* entries CI-CJ;<br>page 4; table 1 *<br>* page 7; table 3 *<br>* page 8; table 4 *<br>* page 9; table 5 *<br>* page 9, lines 23-25 *<br>* page 10, lines 9-15 *<br>-----<br>-/-- | 1-5<br><br><br><br><br><br><br><br><br><br><br><br>6-15 | |

| | TECHNICAL FIELDS SEARCHED (IPC) |
|---|---|
| | C11C<br>A01N<br>A01P<br>A23K |

The present search report has been drawn up for all claims

| Place of search | Date of completion of the search | Examiner |
|---|---|---|
| Munich | 28 May 2024 | Größl, Sylvester |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 20 8643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | ABD EL-HACK MOHAMED E ET AL: "Approaches to prevent and control Campylobacter spp. colonization in broiler chickens: a review", ENVIRONMENTAL SCIENCE AND POLLUTION RESEARCH, vol. 28, no. 5, 26 November 2020 (2020-11-26), pages 4989-5004, XP037348837, ISSN: 0944-1344, DOI: 10.1007/S11356-020-11747-3 title; * abstract * * chapter "Use of bacteriophages"; page 4997 - page 4998 * * chapter "Use of organic acids"; page 4998 * ----- | 1-15 | |
| Y | WO 2023/049848 A1 (S&P INGREDIENT DEV LLC [US]) 30 March 2023 (2023-03-30) * claims 1-7, 13-20 * * table; page 9 - page 12; examples 1-2 * ----- | 1-15 | TECHNICAL FIELDS SEARCHED (IPC) |
| Y | EP 2 042 041 B1 (DSM IP ASSETS BV [NL]) 17 September 2014 (2014-09-17) * claims 1-2 * * page 4, paragraph 43 - page 6, paragraph 49; examples 1-3; tables 1-2 * ----- | 1-15 | |
| Y | WO 2023/089199 A1 (DSM AUSTRIA GMBH [AT]) 25 May 2023 (2023-05-25) * claims 4-7 * * page 18, lines 11-16 * ----- -/-- | 1-15 | |

The present search report has been drawn up for all claims

2

| Place of search | Date of completion of the search | Examiner |
|---|---|---|
| Munich | 28 May 2024 | Größl, Sylvester |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

Europäisches Patentamt
European Patent Office
Office européen des brevets

# EUROPEAN SEARCH REPORT

Application Number
EP 23 20 8643

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MOTA-GUTIERREZ JATZIRI ET AL: "Campylobacter spp. prevalence and mitigation strategies in the broiler production chain", FOOD MICROBIOLOGY, ACADEMIC PRESS LTD, LONDON, GB, vol. 104, 7 February 2022 (2022-02-07), XP086992769, ISSN: 0740-0020, DOI: 10.1016/J.FM.2022.103998 [retrieved on 2022-02-07] title; * abstract * * chapter "5. The application of bacteriophages to combat Campylobacter in broiler production"; page 8 * ----- | 1-15 | |
| | | | TECHNICAL FIELDS SEARCHED (IPC) |

The present search report has been drawn up for all claims

| Place of search | Date of completion of the search | Examiner |
|---|---|---|
| Munich | 28 May 2024 | Größl, Sylvester |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 20 8643

This annex lists the patent family members relating to the patent documents cited in the above-mentioned European search report. The members are as contained in the European Patent Office EDP file on
The European Patent Office is in no way liable for these particulars which are merely given for the purpose of information.

28-05-2024

| Patent document cited in search report | Publication date | Patent family member(s) | Publication date |
|---|---|---|---|
| CN 114514963 A | 20-05-2022 | NONE | |
| WO 2023049848 A1 | 30-03-2023 | NONE | |
| EP 2042041 B1 | 17-09-2014 | BR PI0804911 A2 | 14-07-2009 |
| | | CN 101331915 A | 31-12-2008 |
| | | CN 102239962 A | 16-11-2011 |
| | | EP 2042041 A2 | 01-04-2009 |
| | | EP 2368440 A1 | 28-09-2011 |
| | | ES 2487642 T3 | 22-08-2014 |
| | | ES 2523667 T3 | 28-11-2014 |
| | | JP 5413943 B2 | 12-02-2014 |
| | | JP 6024052 B2 | 09-11-2016 |
| | | JP 2009011320 A | 22-01-2009 |
| | | JP 2014057591 A | 03-04-2014 |
| | | PL 2042041 T3 | 27-02-2015 |
| | | PL 2368440 T3 | 31-10-2014 |
| | | TR 200804792 A2 | 21-01-2009 |
| | | US 2009004308 A1 | 01-01-2009 |
| WO 2023089199 A1 | 25-05-2023 | NONE | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2019038351 A1
- WO 2013121214 A1
- CN 114514963 A


### Non-patent literature cited in the description


- **JANSEN et al.** Large-scale feasibility of organic acids as a permanent preharvest intervention in drinking water of broilers and their effect on foodborne Campylobacter spp. before processing. *Journal of Applied Microbiology*, 2014, 116
- **SKÅNSENG et al.** Prevention of intestinal Campylobacter jejuni colonization in broilers by combinations of in-feed organic acids. *Journal of Applied Microbiology*, 2010, 109
- Management Strategies for Prevention of Campylobacter Infections Through the Poultry Food Chain: A European Perspective. **ALTER et al.** Current Topics in Microbiology and Immunology. Springer, vol. 431
- **SZOTT et al.** Antimicrobial effect of a drinking water additive comprising four organic acids on Campylobacter load in broilers and monitoring of bacterial susceptibility. *Poultry Science*, 2022, 101
- **MANTZIOS et al.** In Vitro Investigation of the Antibacterial Activity of Nine Commercial Water Disinfectants, Acidifiers, and Glyceride Blends against the Most Important Poultry Zoonotic Bacteria. *Pathogens*, 2023, vol. 12